# EUROPÄISCHE PATENTANMELDUNG

(11) **EP 2 944 188 A1**
(43) Veröffentlichungstag der Anmeldung: **18.11.2015**
(21) Anmeldenummer: 15001065.0
(22) Anmeldetag: 14.04.2015
(51) Int. Cl.: A01G 13/02, A01G 13/00, A01G 17/02

(54) **VORRICHTUNG ZUR ABDECKUNG VON OBSTBÄUMEN ODER REBEN**

(30) Priorität: 14.05.2014 DE 102014007043
(71) Anmelder: Braendlin, Oswald, 79588 Efringen-Kirchen (DE)
(72) Erfinder: Braendlin, Oswald, 79588 Efringen-Kirchen (DE)
(74) Vertreter: Zimmermann, Günter

(57) **Zusammenfassung**

Um eine Vorrichtung zur Abdeckung von Obstbäumen oder Reben, bei welcher die an mindestens einer Pfostenreihe und an mindestens einem Spannelement(6) spalierartig angeordneten Obstbäumen oder Reben mittels einem Netz (3) oder einer Folie seitlich abdeckbar sind, derart weiterzuentwickeln, dass eine einfache und kostengünstige Montage des Netzes oder der Folie erreicht wird, ist an dem bodennahen Ende des Netzes (3) oder der Folie ein biegbares Element (4) angeordnet, wobei das Netz (3) oder die Folie in Richtung der mindestens einen Pfostenreihe zusammen mit dem biegbaren Element (4) von einem ersten Bereich bis zu einem zweiten Bereich der Pfostenreihe entlang dieser Pfostenreihe abrollbar oder aufrollbar ist. Die Erfindung betrifft auch eine Netzrolle oder Folienrolle zur Verwendung bei der Vorrichtung und ein Verfahren zur Abdeckung von Obstbäumen oder Reben.

## Beschreibung

Die Erfindung bezieht sich auf eine Vorrichtung zur Abdeckung von Obstbäumen oder Reben, bei welcher die an mindestens einer Pfostenreihe und an mindestens einem Spannelement spalierartig angeordneten Obstbäume oder Reben mittels einem Netz oder einer Folie seitlich abdeckbar sind. Die Erfindung bezieht sich auch auf eine Netzrolle oder eine Folienrolle zur Verwendung bei der Vorrichtung nach Anspruch 1 und auf ein Verfahren zur Abdeckung von Obstbäumen oder Reben.

Eine derartige Vorrichtung, eine derartige Netzrolle und ein derartiges Verfahren sind durch die EP 1 203 526 A1 bekannt. Bei dieser bekannten Vorrichtung kann die Folie oder das Netz an beiden Seiten der Pfostenreihe nach oben und nach unten aufgerollt und abgerollt werden. Zum Aufrollen und Abrollen des Netzes wird eine Rolle verwendet, welche an dem bodennahen Ende des Netzes angeordnet ist. Die Montage der bekannten Vorrichtung ist nachteiligerweise recht aufwändig, da die im allgemeinen recht langen Rollen durch die Obstanlage oder Reben getragen werden müssen. Die Montage mit der Folie oder dem Netz erfolgt dann üblicherweise vor Ort, was ebenfalls recht aufwändig ist.

Es ist eine weitere Vorrichtung zur Abdeckung von Reben bekannt, welche am bodennahen Ende des Netzes eine Kunststoffhülse aufweist, auf welche das Netz aufgerollt wird. Auch diese Montage vor Ort ist recht aufwändig und kann insbesondere bei tiefen Temperaturen nicht durchgeführt werden, da dann der Kunststoff spröde wird und bei der Montage bricht.

Die Aufgabe der Erfindung wird somit darin gesehen, die Vorrichtung, die Netzrolle oder Folienrolle und das Verfahren der eingangs genannten Art derart weiter zu entwickeln, dass eine einfache und kostengünstige Montage des Netzes oder der Folie erreicht wird.

Zur Lösung dieser Aufgabe wird bei einer Vorrichtung gemäß dem Oberbegriff des Anspruchs 1 erfindungsgemäß vorgeschlagen, dass an dem bodennahen Ende des Netzes oder der Folie ein biegbares Element derart angeordnet ist, dass das Netz oder die Folie in Richtung der mindestens einen Pfostenreihe zusammen mit dem biegbaren Element von einem ersten Bereich bis zu einem zweiten Bereich der Pfostenreihe entlang dieser Pfostenreihe abrollbar und aufrollbar ist. Zur Lösung dieser Aufgabe wird weiterhin bei einer Netzrolle oder Folienrolle gemäß dem Oberbegriff des Anspruchs 8 erfindungsgemäß vorgeschlagen, dass die Folienrolle oder Netzrolle entsprechend dem kennzeichnenden Teil dieses Anspruchs ausgebildet ist und weiterhin wird bei einem Verfahren gemäß dem Oberbegriff des Anspruchs 9 erfindungsgemäß vorgeschlagen, dass das Verfahren entsprechend dem kennzeichnenden Teil dieses Anspruchs durchgeführt wird.

Die erfindungsgemäße Vorrichtung weist ein biegbares Element auf. Dieses Element kann alles sein, was biegbar ist und für ein Auf- und Abrollen geeignet ist. Vorteilhafterweise ist das Element ein Metallelement, welches nach dem Biegen seine Form beibehält. Bei der Vorrichtung wird das Element, insbesondere das Metallelement zusammen mit dem Netz oder der Folie nicht vor Ort, sondern extern, beispielsweise in einer Halle, derart vormontiert, dass das Metallelement mit dem Netz oder der Folie verbunden wird. Diese Vormontage ist somit wetterunabhängig und kann bei jeder Temperatur und jedem Wetter durchgeführt werden. Anschließend wird das biegbare Metallelement zusammen mit dem Netz oder der Folie zu einer Netzrolle oder einer Folienrolle aufgewickelt. Danach erfolgt der Transport zu der Obstanlage oder der Rebenanlage. Für diesen Transport wird erheblich weniger Platz benötigt, da die Netzrolle oder die Folienrolle erheblich kleiner ist als die bisher im Stand der Technik bekannten Rollen oder Kunststoffhülsen. Die Netzrolle oder die Folienrolle wird dann an dem ersten Bereich, beispielweise dem vorderen Bereich, der Pfostenreihe aufgestellt und bis zu dem zweiten Bereich, beispielsweise dem hinteren Bereich der Pfostenreihe, abgerollt. Beim Abrollen kann bereits der obere Randbereich des Netzes oder der Folie mit dem Spannelement, beispielsweise einem Firstdraht, welcher sich oben entlang der Pfostenreihen erstreckt, verbunden werden. Die zweite gegenüberliegende Seite der Pfostenreihe kann dann wie vorstehend beschrieben mit einer weiteren Netzrolle oder Folienrolle mit jeweils einem biegbaren Metallelement in gleicher Weise abgedeckt werden. Damit ist eine einfache und kostengünstige Montage des Netzes oder der Folie entlang der Pfostenreihe erreicht. Es ist auch denkbar, dass die Netzrolle oder die Folienrolle sowohl an dem bodennahen unteren Randbereich und an dem oberen Randbereich jeweils ein biegbares Metallelement aufweist, wobei beim Abrollen der obere Randbereich des Netzes oder der Folie über das Spannelement geworfen wird. Damit befindet sich die erste Hälfte der Netzrolle oder Folienrolle auf einer Seite der Pfostenreihe und die zweite Hälfte der Netzrolle oder Folienrolle befindet sich auf der anderen gegenüberliegenden Seite der Pfostenreihe. Durch das Gewicht des biegbaren Metallelementes wird die Folie oder das Netz nach unten gezogen, so dass die Folie oder das Netz insgesamt auch bei starkem Wind ortsfest gehalten wird. Ein weiterer Vorteil bei der erfindungsgemäßen Vorrichtung besteht darin, dass das biegbare Metallelement und damit auch das Netz oder die Folie erheblich länger sind als die bisher im Stand der Technik bekannten Rollen oder Kunststoffhülsen. Letztere sind üblicherweise 3m bis 6m lang. Das biegbare Metallelement kann jedoch bis zu 100m oder 200m lang sein, so dass eine erheblich größere Fläche bei den Obstanlagen oder Rebenanlagen innerhalb kürzester Zeit abgedeckt werden kann.

Als biegbares Element kann alles verwendet werden, was in entsprechend einfacher Weise abrollbar oder aufrollbar ist. Vorteilhafterweise ist das biegbare Metallelement ein Draht, insbesondere ein Stahldraht. Der Stahldraht kann zusätzlich verzinkt sein, so dass er auch unter schlechten Witterungsbedingungen nicht rostet. Es ist sowohl ein runder Draht als auch ein viereckiger Draht denkbar. Auch ein Flacheisen oder ein Drahtseil mit beispielsweise 4mm bis 6 mm Durchmesser wäre denkbar. Das biegbare Element kann vorteilhafterweise auch ein steifes oder hartes Drahtseil sein. Das biegbare Metallelement kann in jeglicher denkbarer Art und Weise mit dem Netz oder der Folie direkt verbunden sein. Es kann beispielsweise mit dem Netz verklebt sein. Eine Ausführungsform der Erfindung sieht vor, dass das bodennahe Ende des Netzes oder der Folie mit dem biegbaren Metallelement über Verbindungselemente verbunden ist. Diese Verbindungselemente können Clips sein, welche sich einfach und schnell an dem Metallelement anbringen lassen, um das über das Metallelement umgeschlagene Netz oder die Folie anzuclippen. Die Verbindungselemente können aus Metall oder Kunststoff sein. Es ist auch denkbar, das Metallelement mit Kunststoff zu überziehen und das Netz oder die Folie an dem Kunststoffüberzug anzukleben. Eine weitere Ausführungsform der Erfindung sieht vor, dass das obere Ende des Netzes oder der Folie mit Befestigungselementen an dem Spannelement befestigt ist. Auch hier können einfache und schnelle Verbindungen wie Clips verwendet werden.

Um besonders lange Pfostenreihen abzudecken, sieht eine weitere Ausführungsform der Erfindung vor, dass mehrere Netze oder mehrere Folien entlang einer Pfostenreihe vorgesehen sind, wobei die biegbaren Metallelemente untereinander mit Verbindungsteilen verbunden sind. Diese Verbindungsteile können beispielsweise Muffen sein, welche geeignet sind, zwei Stahldrähte miteinander zu verbinden. Eine weitere Ausgestaltung der Erfindung sieht vor, dass die biegbaren Metallelemente der beiden an der Pfostenreihe sich gegenüberliegenden seitlichen Netze oder Folien über Verbindungseinrichtungen verbunden sind. Diese Verbindungseinrichtungen können beispielsweise zwei Clipse sein, welche miteinander über einen Kunststoffsteg verbunden sind.

Bei der erfindungsgemäßen Netzrolle oder Folienrolle ist vorteilhafterweise an einem Randbereich des Netzes oder der Folie das biegbare Metallelement angeordnet.

Die Erfindung wird nachstehend anhand der Zeichnung näher erläutert. Die Zeichnung zeigt ein Ausführungsbeispiel der Erfindung. Hierbei stellen dar:
Fig. 1 eine schematische Seitenansicht,

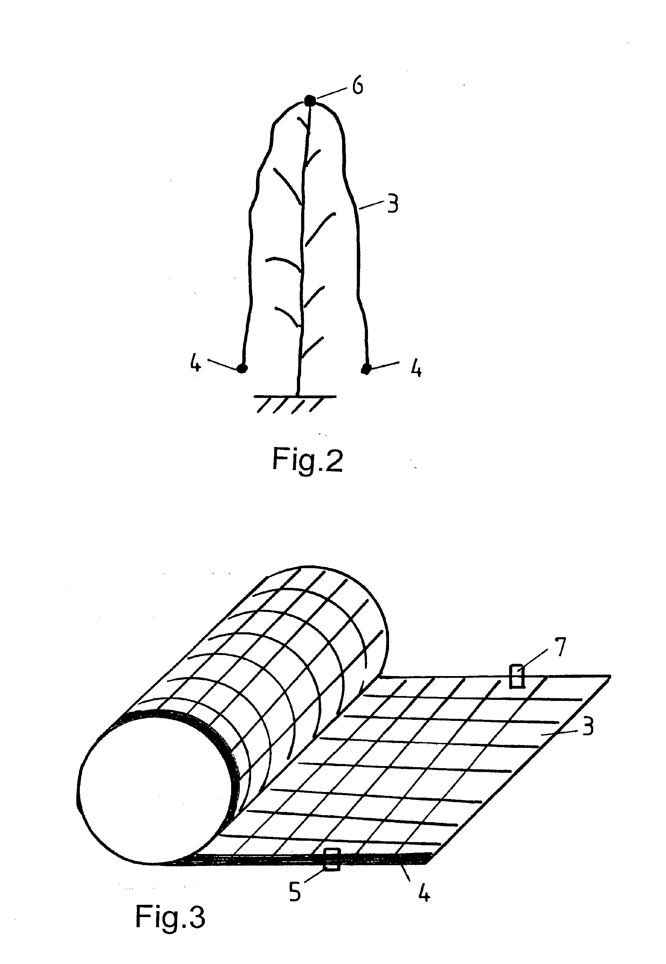

Fig. 2 einen schematischen Querschnitt und
Fig. 3 eine schematische Darstellung einer Netzrolle.

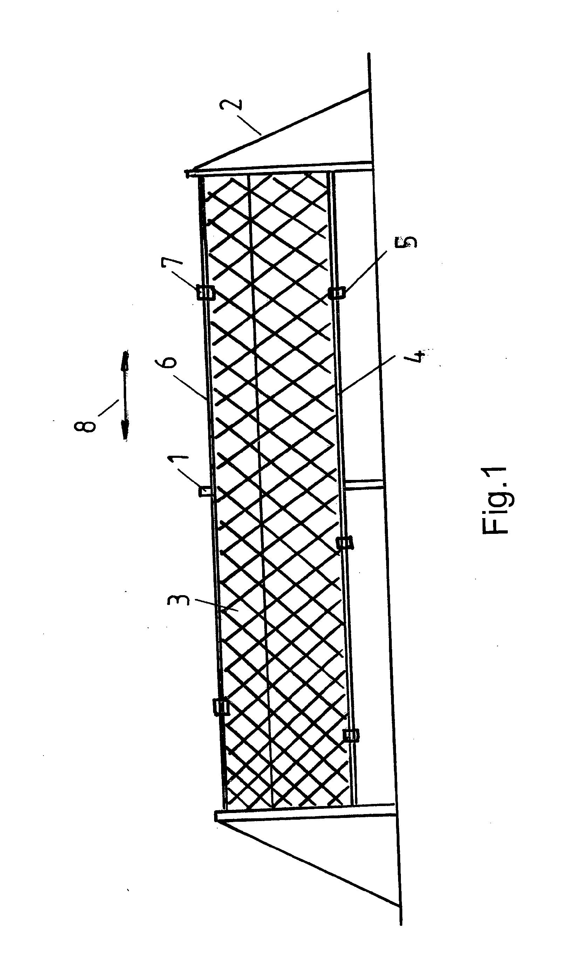

Fig.1 zeigt die Vorrichtung zur Abdeckung von Reben an einer Pfostenreihe mit mehreren Pfosten 1. Die am Ende der Pfostenreihe angeordneten Pfosten 1 sind über Abspannelemente 2 mit dem Boden verankert. An jeder Seite der Pfostenreihe ist zur Abdeckung der Reben ein Netz 3 angeordnet. An dem Netz 3 ist an seinem unteren Randbereich oder seinem unteren bodennahen Ende ein biegbares Metallelement 4 befestigt. Das Metallelement 4 ist über Verbindungselemente 5 mit dem Netz 3 verbunden. Das Metallelement 4 erstreckt sich über die gesamte Länge des Netzes 3. Entlang der Pfosten 1 verläuft im obersten Bereich der Pfosten 1 ein Spannelement 6, beispielsweise ein Firstdraht. An diesem Spannelement 6 ist das Netz 3 mit seinem oberen Randbereich über Befestigungselemente 7 befestigt. Da das Netz 3 mit einem biegbaren Metallelement 4 verbunden ist, kann zum Anbringen oder Entfernen des Netzes 3 an der Pfostenreihe das Netz 3 zusammen mit dem biegbaren Metallelement 4 entlang der Pfostenreihe in Pfeilrichtung 8 abgerollt oder aufgerollt werden. Damit ist eine schnelle und kostengünstige Montage des Netzes 3 möglich, da das Netz 3 in Form einer Netzrolle zusammen mit dem biegbaren Metallelement 4 bereits vormontiert ist und nur noch entlang der Pfostenreihe von einem ersten Bereich bis zu einem zweiten Bereich abgerollt werden muss. Das Entfernen und damit das Aufrollen des Netzes 3 zusammen mit dem biegbaren Metallelement geschieht in gleicher Weise in Pfeilrichtung 8, so dass am Ende des Aufrollens wieder eine Netzrolle vorliegt, welche beispielsweise einfach abtransportiert werden kann, falls das Netz 3 nicht mehr benötigt wird. Das Netz 3 dient zum Schutz der Reben gegen Hagel oder gegen Vögel und Insekten. Wird das Netz 3 nicht benötigt, so kann es auch wie im Stand der Technik bereits bekannt in üblicher Weise auf das biegbare Metallelement von unten nach oben zum Spannelement 6 oder Firstdraht hin aufgerollt werden. Wird es wieder benötigt, erfolgt das Abrollen von oben nach unten. Gegenüber diesem bekannten Aufrollen und Abrollen von unten nach oben und von oben nach unten erfolgt bei der erfindungsgemäßen Vorrichtung und dem Verfahren das Abrollen und Aufrollen in senkrechter Richtung dazu, also seitlich entlang der Pfostenreihen und in Erstreckungsrichtung 8 des Spannelementes 6.

## Patentansprüche

1. Vorrichtung zur Abdeckung von Obstbäumen oder Reben, bei welcher die an mindestens einer Pfostenreihe und an mindestens einem Spannelement(6) spalierartig angeordneten Obstbäumen oder Reben mittels einem Netz (3) oder einer Folie seitlich abdeckbar sind,
**dadurch gekennzeichnet,**
**dass** an dem bodennahen Ende des Netzes (3) oder der Folie ein biegbares Element (4) angeordnet ist, wobei das Netz (3) oder die Folie in Richtung der mindestens einen Pfostenreihe zusammen mit dem biegbaren Element (4) von einem ersten Bereich bis zu einem zweiten Bereich der Pfostenreihe entlang dieser Pfostenreihe abrollbar oder aufrollbar ist.

2. Vorrichtung nach Anspruch 1,
**dadurch gekennzeichnet,**
**dass** das biegbare Element (4) ein Metallelement ist.

3. Vorrichtung nach Anspruch 2,
**dadurch gekennzeichnet,**
**dass** das biegbare Metallelement ein Draht, insbesondere ein Stahldraht ist.

4. Vorrichtung nach einem der vorhergehenden Ansprüche,
**dadurch gekennzeichnet,**
**dass** das bodennahe Ende des Netzes (3) oder der Folie mit dem biegbaren Element (4) verbunden ist.

5. Vorrichtung nach einem der vorhergehenden Ansprüche,
**dadurch gekennzeichnet,**
**dass** das obere Ende des Netzes (3) oder der Folie mit Befestigungselementen (7) an dem Spannelement (6) befestigt ist.

6. Vorrichtung nach einem der vorhergehenden Ansprüche,
**dadurch gekennzeichnet,**
**dass** mehrere Netze (3) oder mehrere Folien entlang einer Pfostenreihe vorgesehen sind, wobei die biegbaren Elemente (4) untereinander mit Verbindungsteilen verbunden sind.

7. Vorrichtung nach einem der vorhergehenden Ansprüche,
**dadurch gekennzeichnet,**
**dass** die beiden biegbaren Elemente (4) der beiden sich gegenüberliegenden seitlichen Netze (3) oder Folien an einer Pfostenreihe über Verbindungseinrichtungen verbunden sind.

8. Netzrolle oder Folienrolle zur Verwendung bei der Vorrichtung nach Anspruch 1,
**dadurch gekennzeichnet,**
**dass** an einem Randbereich des Netzes (3) oder der Folie ein biegbares Element (4) angeordnet ist.

9. Verfahren zur Abdeckung von Obstbäumen oder Reben, bei welchem die an mindestens einer Pfostenreihe und an mindestens einem Spannelement (6) spalierartig angeordneten Obstbäumen oder Reben mittels eines Netzes (3) oder einer Folie seitlich abgedeckt werden,
**dadurch gekennzeichnet,**
**dass** das Netz (3) oder die Folie von einer Netzrolle oder einer Folienrolle in Richtung der mindestens einen Pfostenreihe zusammen mit einem am bodennahen Ende des Netzes (3) oder der Folie angeordneten biegbaren Element (4) von einem ersten Bereich zu einem zweiten Bereich der Pfostenreihe entlang dieser Pfostenreihe abgerollt wird.

10. Verfahren nach Anspruch 9,
**dadurch gekennzeichnet,**
**dass** das obere Ende des Netzes (3) oder der Folie beim Abrollen mit Befestigungselementen (7) an einem oberen Spanndraht (6) befestigt wird.
